Europäisches Patentamt

European Patent Office

Office européen des brevets

(19)

(11)  **EP 1 158 769 A1**

(12)  ## EUROPÄISCHE PATENTANMELDUNG

(43) Veröffentlichungstag:
   **28.11.2001 Patentblatt 2001/48**

(51) Int Cl.⁷: **H04N 1/40**

(21) Anmeldenummer: **01110175.5**

(22) Anmeldetag: **07.05.2001**

| | |
|---|---|
| (84) Benannte Vertragsstaaten:<br>**AT BE CH CY DE DK ES FI FR GB GR IE IT LI LU MC NL PT SE TR**<br>Benannte Erstreckungsstaaten:<br>**AL LT LV MK RO SI**<br><br>(30) Priorität: **17.05.2000 US 204943 P**<br><br>(71) Anmelder: **Heidelberger Druckmaschinen Aktiengesellschaft**<br>**69115 Heidelberg (DE)** | (72) Erfinder: **Telle, Lawrence Bruce**<br>**Rochester, NY 14612 (US)**<br><br>(74) Vertreter: **Franzen, Peter et al**<br>**Heidelberger Druckmaschinen AG,**<br>**Kurfürsten-Anlage 52-60**<br>**69115 Heidelberg (DE)** |

(54)  **Scanvorrichtung mit Druckvorstufenmodus**

(57)   Eine Scanvorrichtung (14) umfasst eine Vorrichtung automatische Dokumenten-Einzugsvorrichtung (32) für Originaldokumente (24) in Form von Papierbogen zu einer Flachbett- oder sonstigen Scanvorrichtung zur automatischen Umwandlung des Originaldokuments (24) durch einen Lesekopf in elektrische Signale oder Daten. Die Rohbilddaten werden in einem Zwischenspeicher gespeichert. Die im Speicher gespeicherten Daten können zum elektronischen Skalieren (92) des Bildes eingesetzt werden, bevor das Bild weiterverarbeitet, z. B. gedruckt oder auf andere Weise wiedergegeben wird. Bei der Manipulation der digitalen Bilddaten wird eine bilineare Interpolation verwendet.

FIG. 2

EP 1 158 769 A1

**Beschreibung**

Die vorliegende Erfindung betrifft Scanvorrichtungen gemäß dem Oberbegriff des Anspruchs 6 und eine Verfahren zur Manipulation von Bildern.

Die in der vorliegenden Anmeldung verwendeten Bezeichnungen haben dieselbe Bedeutung wie dem Fachmann aus dem Bereich des Digitaldrucks und des Scannens bekannt ist. Der Nutzen der vorliegenden Erfindungen ist jedoch nicht auf diese Bereiche beschränkt, auch wenn der Hauptnutzen der hier beschriebenen Erfindungen besonders in diesen Bereichen deutlich wird.

Beim Scannen von Dokumenten wird das Original gescannt und als digitales Bild in einem Hauptcomputer, einem sogenannten Host und/oder einer Workstation gespeichert. Wenn das gescannte Bild nicht zum Drucken oder für andere Veröffentlichungsarten geeignet ist, werden die Scanner-Parameter angepasst und das Bild wird neu gescannt und bearbeitet. Wurde das Bild mit höchster Auflösung erfasst, so kann es zur vielfältigen Weiterverarbeitung im Host genutzt werden. Die Durchführung der Änderungen und deren Verarbeitung nimmt aufgrund des hohen dazu benötigten Bildbearbeitungsaufwands in dem Host und/oder der Workstation häufig viel Zeit in Anspruch. Die Bildanpassung zur Kompensation von Scannerparametern ist demgemäß zeit- und arbeitsaufwändig.

Bei Hochleistungs-Scannern tritt dieses Problem in verstärkter Form auf. Bei dieser Art von Scannern werden in einem Stapel angeordnete Vorlagen in Serie einer Bilderfassungsvorrichtung zugeführt. Ist eines der gescannten Bilder aufgrund unzureichender Scannerparameter inakzeptabel, so muss der gesamte Vorlagenstapel neu eingelegt und gescannt werden, damit die inakzeptablen Bilder in der korrekten Reihenfolge bleiben.

Ein weiteres Problem von Scannern tritt bei deren Einsatz beim Vergrößern oder Verkleinern von Bildern oder Dokumenten, dem sog. Skalieren auf. Das Vergrößern wird in der Regel durch Reduzieren der Motorgeschwindigkeit des Scanners erreicht, wodurch die Geschwindigkeit reduziert wird, mit welcher der Lesekopf die Vorlage passiert. Dieses Verfahren wird wegen der fest vorgegebenen maximalen Bandbreite der Bildbearbeitungs-Hardware eingesetzt. Die erhöhte Bearbeitungszeit ist direkt proportional zum Skalierungsfaktor. Eine 200%-ige Vergrößerung verursacht z. B. eine 200%-ige Verlängerung der Bearbeitungszeit, da die Motorgeschwindigkeit auf die Hälfte verringert wird. Bei Scannern, die eine 400%-ige Vergrößerung ermöglichen, muss das Motorsteuerungssystem im Bereich von einem Viertel der normalen Geschwindigkeit bis zur normalen Geschwindigkeit korrekt und störungsfrei arbeiten. Anders ausgedrückt: Die maximale Scangeschwindigkeit beträgt das Dreifache der minimalen Scangeschwindigkeit. Dieses Skalierungsverfahren wird auch durch Probleme bei der Filterung mit endlicher Kanalimpulsantwort, der sogenannten Finite Impulse Response (FIR)-Filterung beeinträchtigt. Finite Impulse Response-Filter sind für eine bestimmte Bildblenden konstruiert. Durch Veränderung der Scangeschwindigkeit wird diese Blende in Scanrichtung verändert. Die Filter können zwar zur Anpassung an unterschiedliche Blenden verändert werden, aber die Unterstützung eines nicht-symmetrischen FIR-Filters ist weder eine einfache Aufgabe noch eine kostengünstige Lösung.

Anstrengungen im Bezug auf derartige Systeme haben zu kontinuierlichen Entwicklungen zur Verbesserung ihrer Vielseitigkeit, ihrer praktischen Einsatzfähigkeit und Effizienz geführt.

Aufgabe der vorliegenden Erfindung ist es, eine Scanvorrichtung und eine Verfahren zur Skalierung eines Bildes zu schaffen, das die oben genannten Nachteile nicht aufweist und bei dem die Rohbilddaten in einem Daten-Zwischenspeicher gespeichert werden und der Bediener die Möglichkeit hat, in einem Druckvorstufen-Modus die Rohdaten vor dem Drucken oder der sonstigen Wiedergabe des Bildes zu überprüfen und zu manipulieren.

Eine weitere Aufgabe der vorliegenden ist es, eine Scanvorrichtung zu schaffen, der ein Skalieren ohne Veränderung der Geschwindigkeit des Scannermotors ermöglicht.

Eine erfindungsgemäße Scanvorrichtung, die von einem Bediener bedient wird und in dem gedrucktes Material in elektronische Daten umgewandelt wird, die von einem Anwendergerät verwendet werden, umfasst einen Wandler, welcher Licht in digitale Rohbilddaten umwandelt, einen Bildprozessor, welcher die digitalen Rohbilddaten empfängt und manipuliert sowie manipulierte Bilddaten bereitstellt, einen Ausgabe-Datenpfad, über den die Daten an das Anwendergerät weitergeleitet werden, einen Zwischenspeicher zum Speichern von Daten und eine Kontrollvorrichtung, welche überprüft, ob die digitalen Bilddaten im Zwischenspeicher gespeichert sind, durch den Bildprozessor manipuliert werden, über den Ausgabe-Datenpfad weitergeleitet werden oder durch den Bildprozessor manipuliert und dann im Zwischenspeicher gespeichert werden.

Die vorliegende Erfindung schafft einen nützlichen Druckvorstufen-Modus für einen Scanner, da nicht alle gescannten Bilddaten auf Anhieb für einen Betrachter akzeptabel sind. Deshalb ist es von Vorteil, wenn der Bediener die Möglichkeit hat, sich ein gescanntes Bild anzeigen zu lassen, es zu editieren und wieder anzeigen zu lassen, ohne dass ein zusätzlicher Scanvorgang nötig ist.

Zur Lösung der genannten Aufgaben sowie ähnlicher Aufgaben umfasst die Erfindung demgemäß die im Folgenden ausführlich beschriebenen und insbesondere in den Ansprüchen aufgeführten Merkmale. Die folgende Beschreibung und die beigefügten Zeichnungen erläutern beispielhafte Ausführungsformen der Erfindung, die jedoch nur einige der Einsatzmöglichkeiten des Grundgedankens der vorliegenden Erfindung aufzeigen. Weitere Aufgaben, Vorteile und neue Merkmale der Erfindung ergeben sich aus der folgenden näheren Beschreibung der Erfindung in Zusammenhang mit den Zeichnungen.

Es zeigen:

Fig. 1       ein schematisches Blockdiagramm eines erfindungsgemäßen Bildreproduktionssystems;

Fig. 2       ein schematisches Diagramm der erfindungsgemäß in einer Scanvorrichtung vorgesehenen Funktionsblöcke;

Fig. 3a       ein schematisches Blockdiagramm der Datenleitung durch einen erfindungsgemäßen Scanner

Fig. 3b-d       detailliertere Untereinheiten des schematischen Blockdiagramms der Datenleitung durch einen erfindungsgemäßen Scanner;

Fig. 4a       ein schematisches Blockdiagramm eines erfindungsgemäßen Bildprozessors;

Fig. 4b-e       detailliertere Untereinheiten des schematischen Blockdiagramms eines erfindungsgemäßen Bildprozessors;

Fig. 5       eine schematische Darstellung einer Adresse in einem Adresszähler gemäß der vorliegenden Erfindung;

Fig. 6       eine Darstellung eines bilinearen Interpolations-Beispiels für ein Pixel gemäß der vorliegenden Erfindung;

Fig. 7       ein Flussdiagramm des Betriebs des erfindungsgemäßen Scanners.

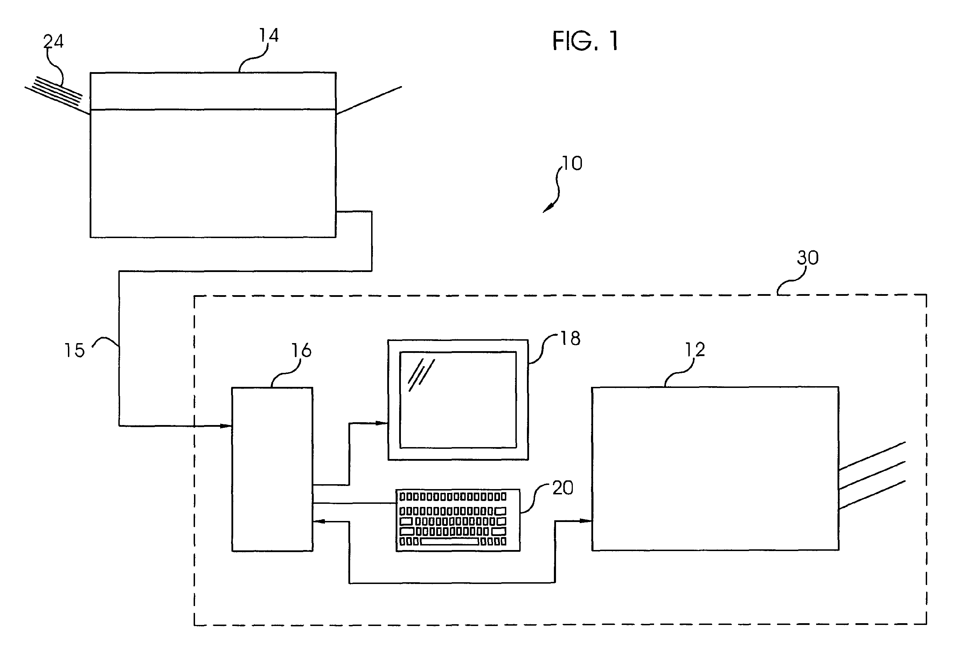

In den Zeichnungen werden ähnliche oder einander entsprechende Teile in den unterschiedlichen Ansichten mit ähnlichen Bezugszeichen bezeichnet. In Fig. 1 ist ein digitales Kopier-/Druckreproduktionssystem 10 gezeigt, das eine (Markier- oder) Druckvorrichtung 12, eine Originaldokument-Lesevorrichtung, insbesondere eine Scanvorrichtung 14 und einen Computer bzw. eine Workstation 16 mit einer Bedienerschnittstelle, z. B. einem Monitor 18 und einer Tastatur 20, umfasst. Die Markiervorrichtung 12, der Computer/die Workstation 16, der Monitor 18 und die Tastatur 20 bilden gemeinsam oder jeweils ein Anwendergerät 30, der die von der Scanvorrichtung 14 ausgegebenen digitalen Bilddaten über eine Datenausgangsleitung 15 aufnimmt und sie in irgendeiner Weise reproduziert. Ein Digitaldrucker ist eine Druckvorrichtung 12, die digitale Bilddaten empfängt und die durch die Daten definierten Bilder auf ein Medium (z. B. Papier) aufdruckt. Eine typische Einsatzmöglichkeit eines Scanners 14 ist das Lesen von Originaldokumenten 24, deren digitale Wiedergabe zur Überprüfung durch einen Bediener, der entscheidet, welche Daten schließlich an eine Druckvorrichtung zur Reproduktion der Bilder auf Papier weitergegeben werden.

Die Funktionsweise des Scanners 14 ähnelt insoweit der eines herkömmlichen Kopierers, als ein Originaldokument 24 zunächst von einer Lampe belichtet wird. Das Licht wird von den hellen und dunklen Bildbereichen des Originals proportional zur Helligkeit des Originals reflektiert. Das Licht wird über Spiegel geleitet und mittels einer Linse auf die Photodetektorelemente gerichtet. Durch die Photodetektorelemente wird das Bild sequenziell in kleine Punkte (sog. Bildelemente oder Pixel) aufgelöst und das Licht für jeden Punkt in ein proportionales elektrisches Signal umgewandelt. Es sind verschiedene Arten von photoelektrischen Wandlern bekannt, z. B. Photodioden, Phototransistoren und ladungsträgergekoppelten Schaltungen, sog. Charge-Coupled Devices (CCDs) (Auf diese Weise werden die Tonwerte des Originals in ein Muster aus proportionalen, sequenziellen Spannungswerten aufgelöst. Das von der CCD gesendete sequenzielle elektrische Signal entspricht in analoger Form der für jedes Pixel aufgezeichneten Bilddichte. Das elektrische Signal wird dann von einem A/D-Wandler in ein äquivalentes digitales Signal umgewandelt. Enthält das Originalbild nur schwarz und weiß, so genügt eine Ausgabe von nur einem Bit (einer Signallinie) zur Angabe des gesamten Tonwertbereichs. Vorzugsweise werden jedoch auch Grauwerte wiedergegeben. Mit einer Ausgabe von zwei Bits können Werte durch vier unterschiedliche Kombinationen aus "1" und "0", nämlich durch "00", "01", "10" und "11" wiedergegeben werden. Demgemäß verändert sich das (analoge) Eingabesignal entsprechend, wenn sich die Dichte des Originals von weiß über grau zu schwarz verändert. Eine Zwei-Bit-Ausgabe ermöglicht eine Einteilung dieses Farbbereichs in vier Grauwerte zur Umwandlung in ein digitales Signal. Wird eine Vier-Bit-Ausgabe verwendet, so sind 16 Grauwerte möglich. Hierbei wird deutlich, dass ein digitales Signal mit einer größeren Zahl von Ausgabe-Bits eine genauere Wiedergabe der unterschiedlichen Dichten des Originals ermöglicht. Eine Erhöhung der Anzahl von Ausgabe-Bits erfordert jedoch eine Erhöhung der Speicherkapazität und der Rechenleistung, damit die durch den Scanvorgang erzeugte größere Datenmenge verarbeitet werden kann. Die vorliegende Erfindung ermöglicht z. B. eine Ausgabe von acht oder mehr Bits.

Nach Umwandlung der einzelnen Spannungswerte in ein elektrisches Signal kann das Bild mittels eines elektronischer Schaltkreise in einem Bildprozessor durch Signalbearbeitung verändert werden. Die Scanvorrichtung 14 erzeugt eine Reihe von elektrischen Signalen, die den Bildgehalt des Originaldokuments 24 wiedergeben. Nach der Bildbearbeitung wird das elektrische Signal über Übertragungskabel an ein Anwendergerät, z. B. eine Druckereinheit 12 oder eine andere Bedienerschnittstelle, z. B. einen Computer / eine Workstation 16, übermittelt, wo das Bild wiedergegeben wird.

Die Scanvorrichtung 14 umfasst ferner eine automatische Dokumenten-Einzugsvorrichtung 32, die fortlaufend nacheinander Originalvorlagen in Papierform einem Scannermechanismus mit Auflageplatte 38 zuführt, wo die Vorlagen automatisch durch den Lesekopf, z. B. eine lineare Anordnung von Festkörper-CCDs eingelesen werden. Anstelle der Zufuhr von Bogen können auch Dokumente in Buch- oder Bogenform auf den Scannermechanismus mit Auflageplatte 38 aufgelegt werden.

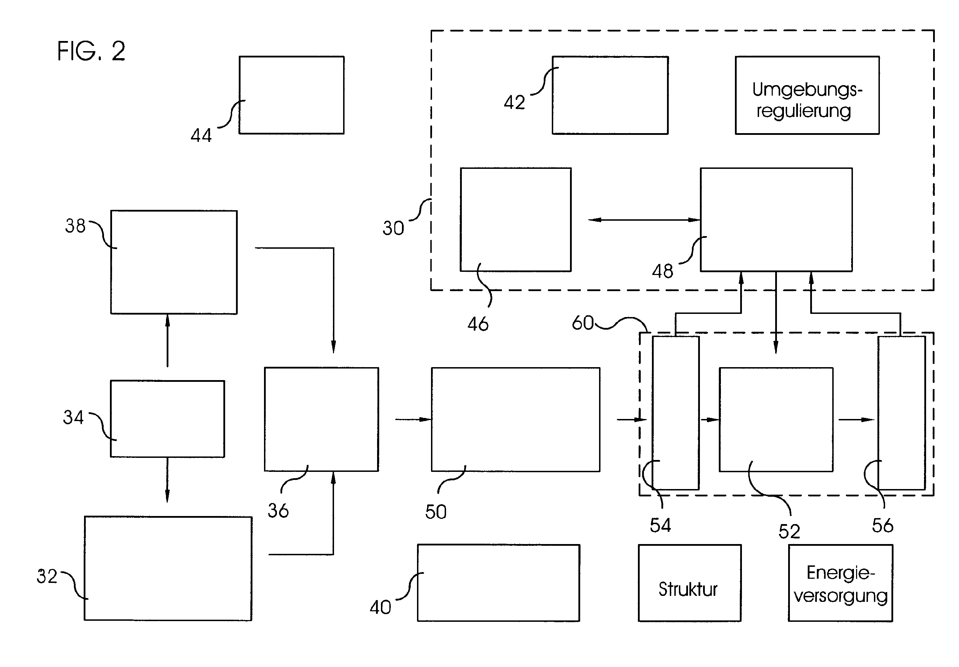

In Fig. 2 sind die Funktionsblocks eines erfindungsgemäßen Scanners 14 dargestellt, der eine automatische Dokumenten-Zuführeinrichtung 32, ein Belichtungs-Untersystem 34, ein optisches Untersystem 36, einen Scannermechanismus mit Auflageplatte 38, eine Bewegungssteuerung und entsprechende Sensoren 40, Scanner-Schnittstellensoftware 42, Scanner-Steuerungssoftware 44, Logik- und Kontrollvorrichtung 46, Kommunikations-Schnittstellenhardware 48, CCD und analoge Frontend-Elektronik 50, einen digitalen Bildbearbeitungsprozessor 52, einen ersten Zwischenspeicher 54 für Rohbilddaten (sog. raw image data oder RID) und einen zweiten Zwischenspeicher 56 für manipulierte Bilddaten (sog. manipulated image data oder MID). Der digitale Bildprozessor 52 und die Zwischenspeicher 54, 56 bilden einen Bildbearbeitungs- oder [P-Block 60. Die automatische Dokumenten-Zuführeinrichtung 32, das Belichtungs-Untersystem 34, das optische Untersystem 36, der Scannermechanismus mit Auflageplatte 38 und die CCDs sowie die analoge Frontend-Elektronik 50 liefern digitale Bilddaten in "Rohform", d. h. unbearbeiteter Form, an einen Zwischenspeicher 54. Dies bedeutet, dass das Original eingelesen und digitalisiert wurde, die Bilddaten aber nur geringfügig oder gar nicht bearbeitet oder manipuliert wurden, um die Eigenschaften des Bildes zu verändern. Zu diesem Zeitpunkt werden in der Regel nur system- oder hardwarebedingt fehlerhafte Bildstellen korrigiert, d. h. es werden z. B. Korrekturen der CCD-Taktgebung sowie Linearitätskorrekturen und Pixelkorrekturen vorgenommen.

Die im Rohbilddaten-Zwischenspeicher gespeicherten Rohbilddaten können für viele unterschiedliche Zwecke herangezogen werden, wie im Folgenden näher erläutert wird. Die Rohbilddaten können z. B. direkt zur Ansicht oder zum Ausdrucken an den Bedienerblock 30 geleitet werden. Dadurch erhält der Bediener die Möglichkeit, das gescannte Bild zu überprüfen und zu entscheiden, ob eine weitere Bearbeitung des Bildes nötig ist oder die Daten im digitalen Bildprozessor geändert werden sollen. In diesem Zusammenhang ist es von Vorteil, wenn die Daten im Zwischenspeicher so lange wie möglich gespeichert bleiben, wobei der Zeitraum von der verfügbaren Speicherkapazität abhängig ist.

Die Rohbilddaten (RID) können auch zur Manipulation an den IP-Block geleitet werden. Der IP-Block erhält die Rohbilddaten (von einer Kamera-Kartenschnittstelle über den Zwischenspeicher) zur Bearbeitung und zur Speicherung in einem externen Speicher (oder einem lokalen Speicher) der sich an einem PCI Bus befindet. Die im externen Speicher gespeicherten Bilddaten können dann an den Host weitergeleitet werden oder im digitalen Bildprozessor zur weiteren Bearbeitung verwendet werden. Die Bearbeitung besteht aus mehreren Funktionen zur Manipulation der Rohbilddaten, z. B. Pixelkorrektur, Schrägstellungskorrektur, Bildschirmdarstellung, FIR Filterung, Skalierung, Komprimierung, Farbsimulation durch zufälliges Streuen, sog. Fehlerdiffusion oder error diffusion, automatische Helligkeits- und Farbwert Anpassung etc.

Die manipulierten Daten des Bildprozessors werden anschließend in einem zweiten Zwischenspeicher 56 für manipulierte Bilddaten (MID) abgelegt. Obwohl hier beispielhaft zwei separate Bild-Zwischenspeicher 54, 56 gezeigt sind, können beide Zwischenspeicher 54, 56 auf demselben Speicherchip oder auf derselben Karte vorgesehen sein. Wenn die Daten aus dem MID-Zwischenspeicher 56 benötigt werden, werden sie über die Datenschnittstelle 48 aufgerufen.

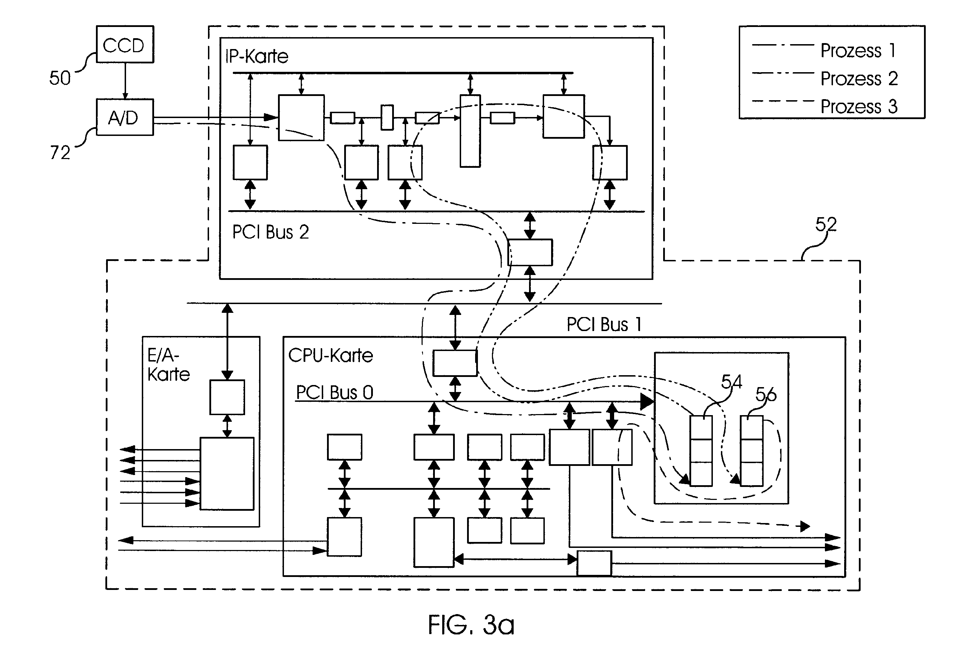

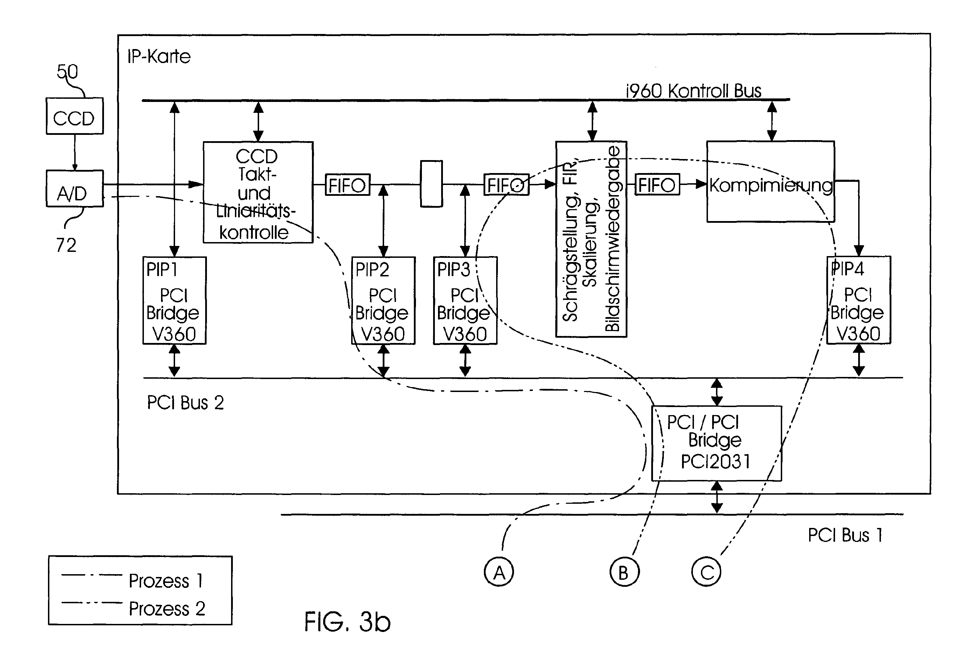

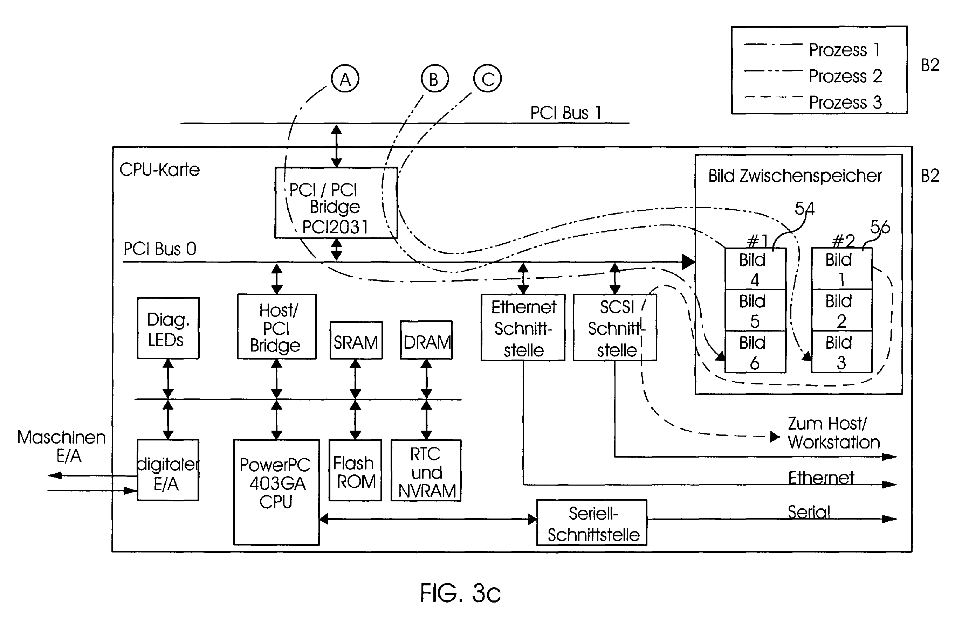

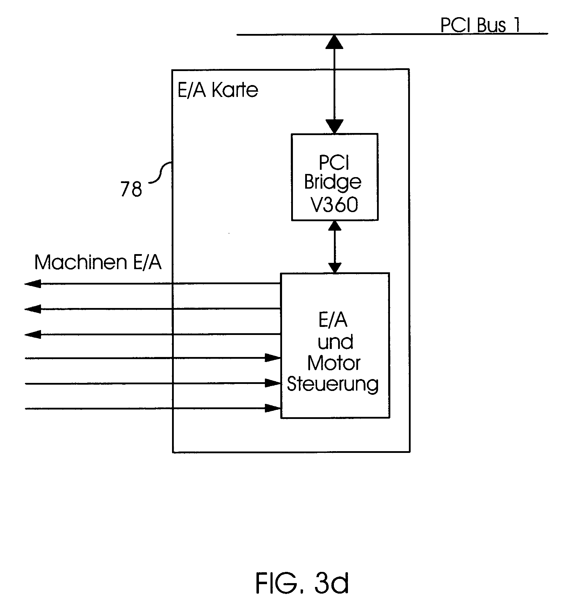

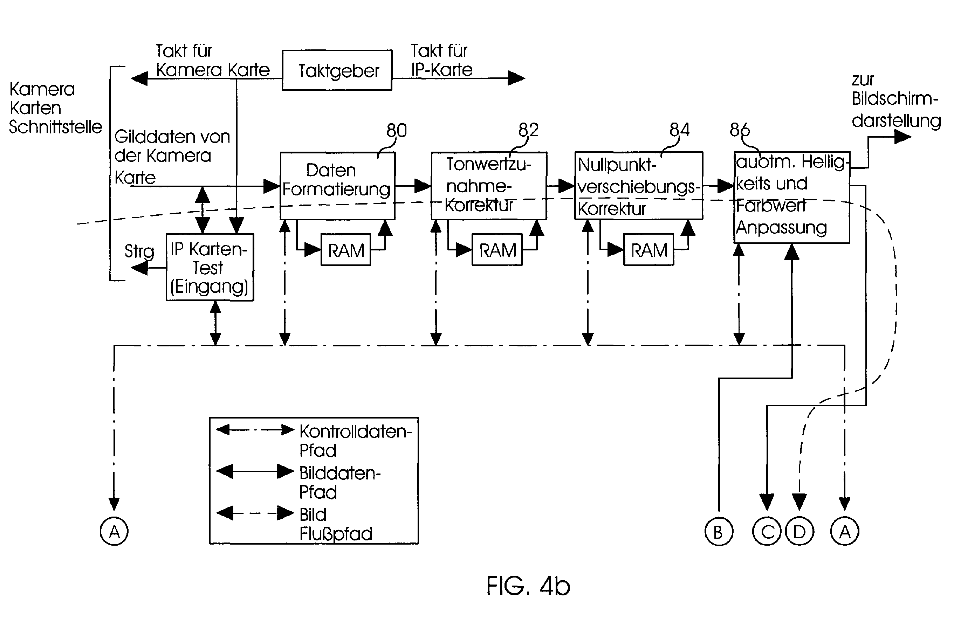

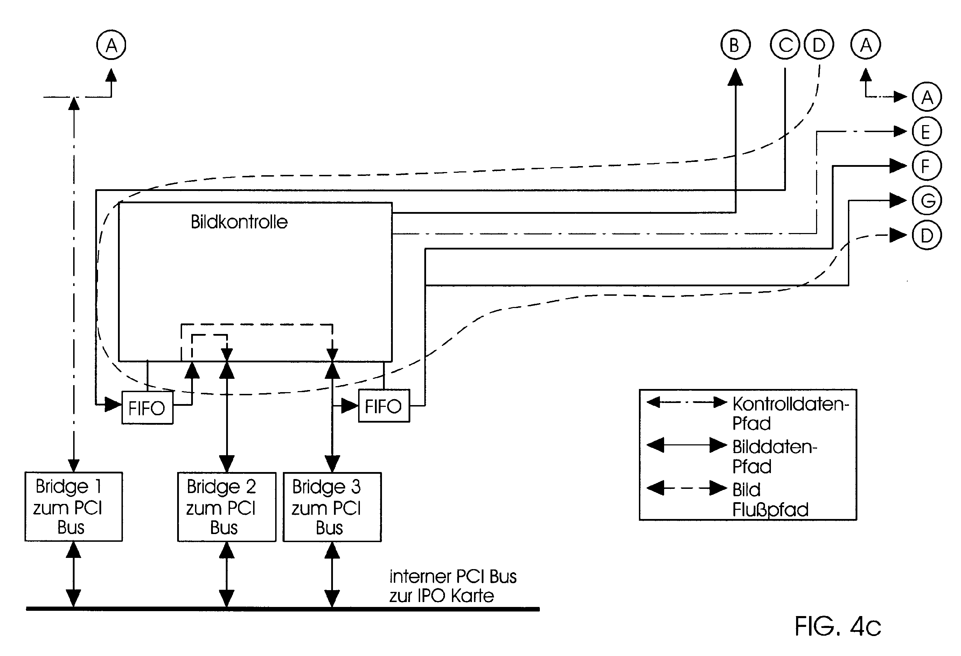

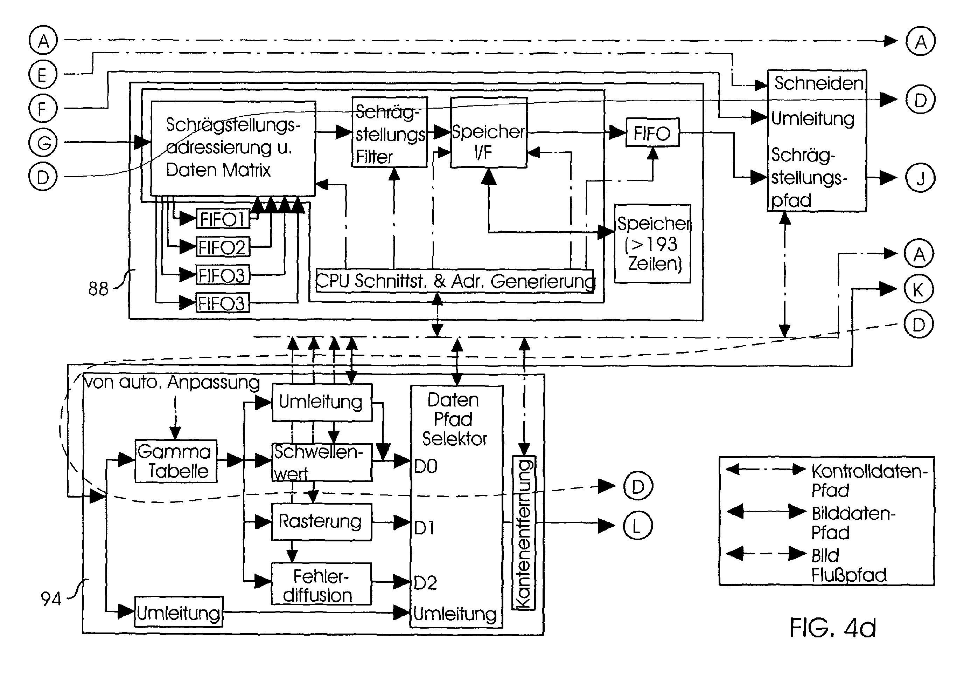

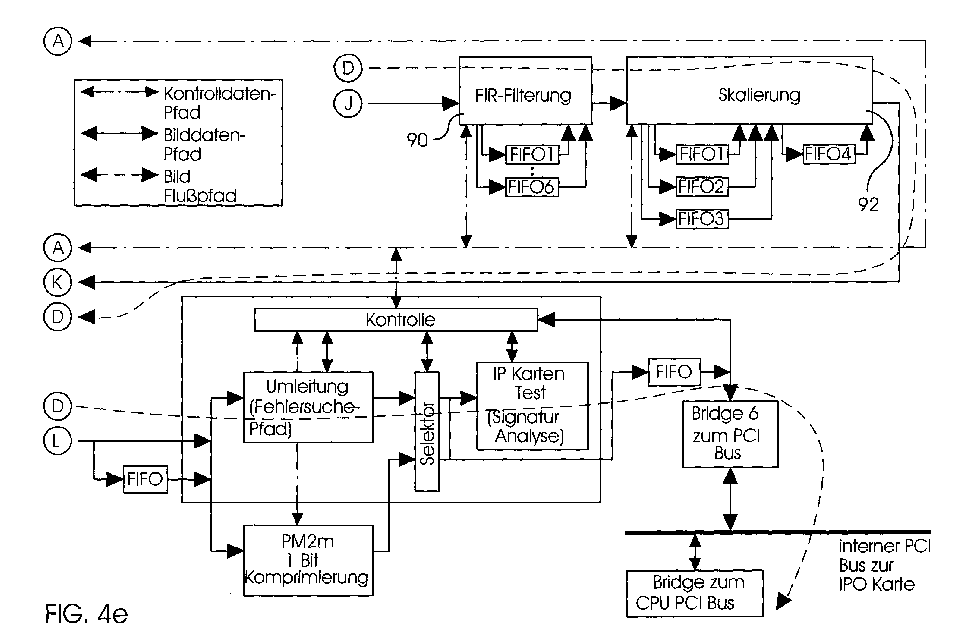

In Fig. 3a-d ist eine Ausführungsform der vorliegenden Erfindung gezeigt, die eine CCD 70 umfasst, die analoge Bildinformationen an einen A/D-Wandler 72 leitet. Zur Verdeutlichung sind Prozess-, Bild- und Datenpfade, die von einer der Detailansichten 3b bis 3d zu einer anderen Detailansicht 3b bis 3d führen mit Buchstaben markiert. Der entsprechende Pfad setzt sich am selben Buchstaben fort, in dem er in der vorangegangenen Figur endet. Entsprechendes gilt für die Fig. 4b bis 4e.

Die digitalen Rohbilddaten werden über einen Taktgeber und einen Linearitätskorrektur-Block an einen Rohbild-Zwischenspeicher 54 geleitet. Anschließend werden die Daten extrahiert und einem Bearbeitungsvorgang oder mehreren Bearbeitungsvorgängen unterzogen, in denen die Daten manipuliert werden, bevor sie in einem MID Zwischenspeicher 56 abgelegt werden. Die Bildbearbeitungsvorgänge umfassen z. B. (aber nicht ausschließlich) Schräglaufkorrekturen, Bildschirmdarstellung, FIR-Filterung, Skalierung, Komprimierung, Fehlerdiffusion und automatische Helligkeits- und Farbwert Anpassung .

Durch die Linearitätskorrektur werden Unregelmäßigkeiten in den Ausgaben der CCDs bei konstanter Eingabe ausgeglichen. Bei der Pixelkorrektur werden einzelne Pixeldaten korrigiert, die von einem erwarteten Pixelwert abweichen. Die Schrägstellungskorrektur gleicht eine Fehlausrichtung der Originaldokumente aus, die während des Scannens aufgetreten ist. Bei der Bildschirmwiedergabe, der Fehlerdiffusion und dem Schwellenwert Segmentierungsverfahren, (sog. Thresholding) wird die Datenanzahl pro Pixel (von acht Bits pro Pixel auf zwei Bits pro Pixel) reduziert. Die FIR-Filterung ist eine Tiefpass-Filtertechnik zur Kantenschärfung. Beim Skalieren wird das Bild vergrößert oder verkleinert. Komprimierung bezieht sich auf eine typische Datenkomprimierungstechnik zur Reduzierung der zum Speichern des Bildes erforderlichen Speicherkapazität. Der Fehlerdiffusions-Algorithmus ist ein adaptives Verfahren, das auf folgender Beobachtung basiert: Wurde in einem einfachen binären Threshold-Verfahren die Entscheidung getroffen ein bestimmtes Pixel zu drucken, so ist der Fehler, der durch diese Entscheidung im Bild entsteht, bekannt. Wenn z. B. eine Vorlage zu 75% schwarz ist und ein schwarzes Bit gedruckt wird, so ist 25% eines Bits zu viel Schwarz auf dem Druck. Der Fehlerwert wird auf benachbarte, zufällig ausgewählte Punkte verteilt. Wenn also zu viel Schwarz gedruckt wurde, so wird der Fehler auf die umliegenden Punkte angerechnet, so dass diese etwas mehr Weiß enthalten. Wurde dagegen zu wenig Schwarz gedruckt, so wird der Fehlerwert von den umliegenden Punkten abgezogen, so dass diese etwas mehr Schwarz enthalten. Für dieses Verfahren wird kein Raster verwendet. Das entstehende Bild ist stark abhängig von der Wahl der Nachbarpunkte und der Fehlerverteilung. Bei der automatischen Belichtung werden unzureichende Belichtungsniveaus korrigiert. All diese und andere, auch im Rahmen der vorliegenden Erfindung mögliche Bildbearbeitungsfunktionen sind dem Fachmann bekannt, wobei die jeweils angewandte Technik von vielen scannerbedingten Faktoren und Bedienerbedürfnissen abhängig ist.

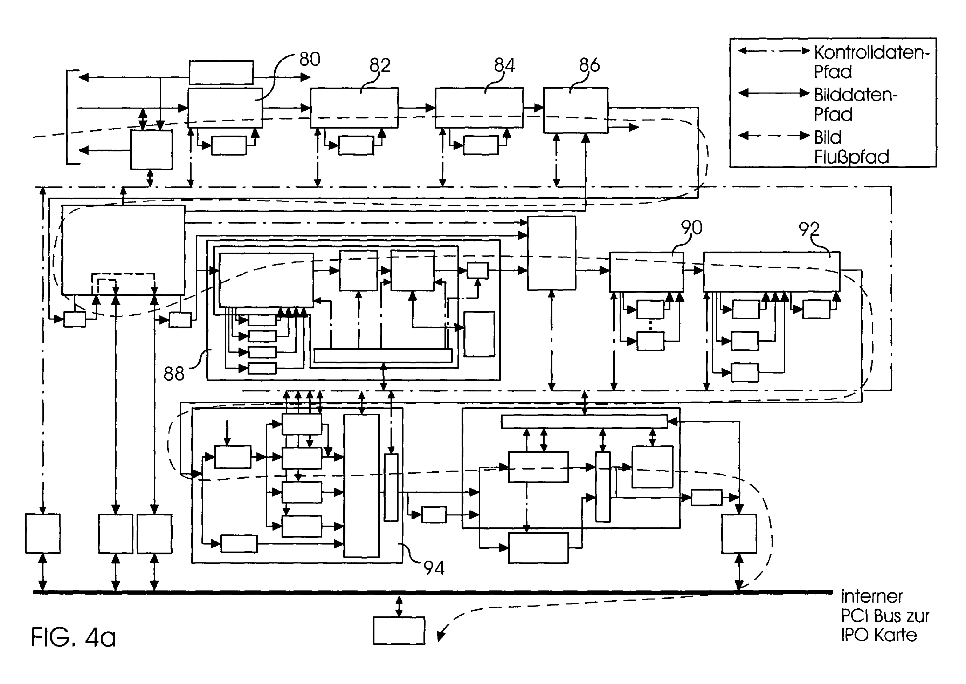

In Fig. 4a-e ist der Ablauf des Datenflusses durch den Bildprozessor dargestellt: Nach der Datenformatierung 80, erfolgen Verstärkungs-Korrektur 82, Nullpunktverschiebungs-Korrektur 84, automatische Helligkeits- und Farbwert Anpassung 86, Schrägstellungskorrektur 88, FIR-Filterung 90, Skalierung 92 und ein Block 94, der Thresholding, Rasterung und Fehlerdiffusion (als Wiedergabeverfahren) enthält.

Ein Beispiel für die im IP-Block vorgenommenen Datenmanipulationen ist die Skalierung. Der Zweck der Skalierung besteht in der Vergrößerung eines digitalen Bildes in einem Bereich zwischen 100% und 400% (in 1%-Schritten) oder der Verkleinerung des Bildes in einem Bereich zwischen 100% und 25% (in 1%-Schritten). Beim Skalieren werden die gescannten Bilder in die Scanrichtung und quer zur Scanrichtung vergrößert oder verkleinert, wobei die Vergrößerung oder Verkleinerung in die Scanrichtung und die Vergrößerung oder Verkleinerung quer zur Scanrichtung unabhängig voneinander erfolgen, so dass die Möglichkeit besteht, das Bild in die eine Richtung zu vergrößern und es gleichzeitig in die andere Richtung zu verkleinern. Die Bildwiedergabe zu 100% sowie Verkleinerungen (in beide Richtungen) können bei voller Produktivität erfolgen. Beim Verkleinern wird durch einen Algorithmus pixelweise entschieden, ob das Pixel im endgültigen Bild erscheint (mit Interpolation) oder ausgelassen wird. Bei einer 100%-igen Wiedergabe bleibt jedes Pixel erhalten. Bei der Vergrößerung werden zusätzliche Pixel in das Bild eingesetzt, um es zu vergrößern. Das zu vergrößernde Bild wird zunächst im Speicher abgelegt, dann aufgerufen und vergrößert. Bei der Vergrößerung läuft das System mit derselben Taktgeschwindigkeit, muss jedoch eine größere Datenmenge verarbeiten. Durch den Einsatz des Rohdaten-Zwischenspeichers 54 muss die Motorgeschwindigkeit des Scanners 14 also nicht verändert werden, da das Skalieren mathematisch, insbesondere algorithmisch durchgeführt wird, indem die gespeicherten Rohdaten in "skalierte" Bilddaten (d. h. in Daten, die ein in dem Reproduktionsgerät/der Markierungsvorrichtung 12 zu verwendendes skaliertes Bild wiedergeben) umgewandelt werden.

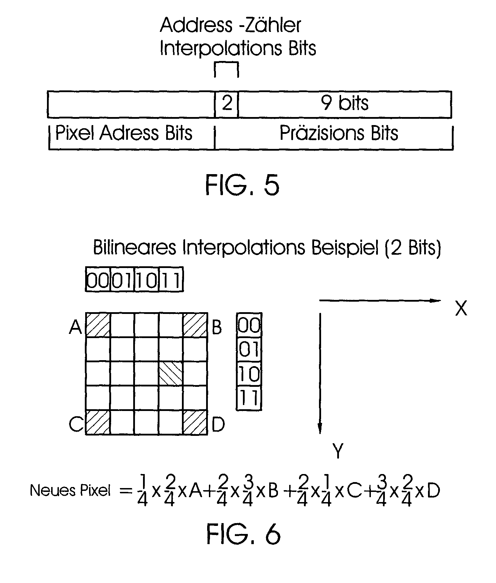

Ein für die Skalierung verwendbarer Algorithmus arbeitet mit einem bilinearen Interpolationsverfahren, bei dem der Wert des aktuellen Pixels und der Wert von drei benachbarten Pixels zur Bestimmung des zu speichernden Pixelswerts herangezogen wird. Da die Position des gewünschten Ausgabepixels zwischen zwei Pixeln liegen kann, ist ein Verfahren zur Interpolation des Pixelwerts aus den benachbarten Pixeln erforderlich. Bei dem bilinearen Interpolationsverfahren gibt es Interpolations-Präzisionsbits und Pixeladressen-Bits. Zweidimensionale Skalierung kann problemlos durch den Einsatz von Adressregistern erreicht werden, welche die Pixelposition des zu bearbeitenden Pixels für das ausgegebene skalierte Bild definieren. Die Register haben einen ganzzahligen Teil und einen gebrochenen Teil, wobei letzterer eine vom Benutzer definierbare Anzahl von Präzisions- und Interpolationsbits enthält. Die Anzahl der Präzisionsbits beeinflusst den Unterschied zwischen dem gewünschten und dem tatsächlichen Skalierungsfaktor: je mehr Präzisionsbits, desto weniger Fehler. In Fig. 5 ist diese Adresszähler-Komponente in Interpolationsbits dargestellt. Für jedes Eingabe-Pixel wird dem Adresszähler ein (auf der Basis des gewählten Skalierungsfaktors) berechneter Delta-Wert hinzugefügt. Dieser Wert wird wie folgt berechnet:

$$delta = 2^{\wedge}(\text{Präzisionsbits})/\text{Skalierungsfaktor}$$

Werden z. B. 11 Präzisionsbits eingesetzt, so gilt: $2^{11} = 2048$. Bei einem Skalierungsfaktor von 150% oder 1,5 ergibt sich: delta = 2048/1,5 = 1365. Der Delta-Wert liegt zwischen 512 und 8192 (für 11 Präzisionsbits und 25% bis 400%).

Eine unabhängige X- und Y-Skalierung erfordert die Berechung von zwei Deltavariablen nämlich jeweils eine in Scanrichtung und eine quer zur Scanrichtung. Für jede Achse müssen zwei separate Adresszähler vorgesehen sein.

Beim Vergrößern wird der Adressenwert für jedes Ausgabepixel durch Addition des Vergrößerungswerts zum vorhergehenden Wert im Adresszählerrechenregister berechnet. Die Bits 9 und 10 bestimmen die Interpolationsfaktoren, die bei der Interpolation zwischen Pixeln verwendet werden. Es ist sowohl ein Rechenregister in Scanrichtung und ein Rechenregister quer zur Scanrichtung vorgesehen, die parallel arbeiten, so dass der endgültige Interpolationsfaktor auf den Ergebnissen beider Rechenregister basiert. Bit 11 kann als Verlängerungs- oder Roll-over-Bit betrachtet werden. Wenn dieses Bit den Wert 1 hat, so geht der Adresszähler zum nächsten Pixel über. In Fig. 6 ist gezeigt, wie ein Wert für ein "neues Pixel" bestimmt wird. Ein vorgegebenes Pixel A ist von einer 4x4-Matrix der möglichen Interpolationspositionen umgeben. Diese 16 Positionen werden mittels der zwei Bits aus dem Rechenregister quer zur Scanrichtung (Bits 9 und 10) und des Rechenregister in Scanrichtung (Bits 9 und 10) adressiert.

Ein weiteres erfindungsgemäßes Skalierungsverfahren sieht vor, dass die Bildlinien in einem FIFO-Speicher gespeichert werden und dann eine nach der anderen aufgerufen werden, um zu entscheiden, ob die Daten erhalten bleiben sollen oder nicht. Anstelle der Addition des Vergrößerungswerts zum Rechenregister wird ein Pixelwert (800H) für jedes eingegebene Pixel zum Rechenregister addiert und das Ergebnis mit dem Vergrößerungswert verglichen, um zu entscheiden, ob ein Roll-over-Fall vorliegt. Ist der Rechenregister-Wert gleich dem Vergrößerungswert oder größer als der Vergrößerungswert, so liegt ein Roll-over-Fall vor und das Pixel bleibt erhalten. Bei diesem Verfahren sind die Bits 9 und 10 nicht mehr automatisch die Interpolationsbits. Sind die Bits 0 bis 11 im Akkumulator gleich Null, so ist die Interpolation gleich "00". Wenn die Bits 0 bis 8 im Akkumulator gleich Null sind, kommt die folgende Tabelle zum Einsatz:

| Bits 10 und 9 | Interpolationsergebnisse |
| --- | --- |
| 00 | 00 |
| 01 | 11 |
| 10 | 10 |
| 11 | 01 |

Ansonsten gilt: Interpolation = Inverses der Bits 9 und 10.

Mit der Translation der Interpolationsbits sowohl in Scanrichtung als auch quer zur Scanrichtung kann bei einer Verkleinerung oder einer Vergrößerung oder einer Kombination dieselbe Tabelle eingesetzt werden, um zur Bestimmung des neuen Pixelwerts die korrekten Faktoren zu A, B, C, D zu ermitteln. Die Berechnung lautet:

$$((A\_Faktor \times A) + (B\_Faktor \times B) + (C\_Faktor \times C) + (D\_Faktor \times D)) / 16$$

In Fig. 6 ist die bilineare Interpolationsberechnung gezeigt, wenn zwei Interpolationsbits verwendet werden. Der ganzzahlige Teil der X- und Y-Adressregister weist Punkt und Pixel A einander zu. Das gewünschte Ausgabepixel liegt im Bereich der Pixel A, B, C und D. In Fig. 6 enthält der gebrochene Teil des X-Adressenregisters in beiden Interpolationsbits 11. Der gebrochene Teil des Y-Adressregisters enthält in beiden Interpolationsbits 10. In Fig. 6 ist die Position des gewünschten Ausgabepixels relativ zu den vier Pixel gezeigt, die es begrenzen. Zu beachten ist hierbei, dass es sich um ein 4x4-Gitternetz handelt - bei drei Interpolationsbits würde sich ein 8x8-Gitternetz ergeben. Die Gleichung zur Berechnung des neuen Pixels hat die folgenden Koeffizienten: 2/16 für A, 6/16 für B, 2/16 für C und 6/16 für D. Je näher ein Pixel der gewü liegt, desto stärker wird es gewichtet.

Die Adressenregister werden zur Bestimmung der x- und y-Koordinaten der Position des gewünschten Pixels eingesetzt. Die folgenden Beispiele verdeutlic

**Beispiel 1: 50%-ige Verkleinerung bei 11 Präzisionsbits**

Für jede Adresse wird die Adresse um 2048/0,50 = 4096 erhöht.

Tabelle 1, Daten zu Beispiel 1

| Ausgabepixel | exakte Adresse | Flussadresse (exakte Adresse / 2048) |
|---|---|---|
| 0 | 0 | 0,0 |
| 1 | 4096 | 2,0 |
| 2 | 8192 | 4,0 |
| 3 | 12288 | 6,0 |
| 4 | 16384 | 8,0 |

**Beispiel 2: Verkleinerung auf 75% bei 11 Präzisionsbits (2^11 = 2048)**

Für jede Adresse wird die Adresse um 2048/0,75 = 2731 erhöht.

Tabelle 1, Daten zu Beispiel 2

| Ausgabepixel | exakte Adresse | Flussadresse (exakte Adresse / 2048) |
|---|---|---|
| 0 | 0 | 0,0 |
| 1 | 2731 | 1,333 |
| 2 | 5462 | 2,667 |
| 3 | 8193 | 4,000 |
| 4 | 10924 | 5,334 |

**Beispiel 3: Vergrößerung auf 200% bei 11 Präzisionsbits (2^11 = 2048)**

Für jede Adresse wird die Adresse um 2048/2,0 = 1024 erhöht.

Tabelle 1, Daten zu Beispiel 3

| Ausgabepixel | exakte Adresse | Flussadresse (exakte Adresse / 2048) |
|---|---|---|
| 0 | 0 | 0,0 |
| 1 | 1024 | 0,5 |
| 2 | 2048 | 1,0 |
| 3 | 3072 | 1,5 |
| 4 | 4096 | 2,0 |

Bei der vorliegenden Skalierungstechnik wird ein Multibit-Bild mit normaler Geschwindigkeit erfasst und in einem Multibit-Rohbilddaten-Zwischenspeicher 54 gespeichert. Kurz nach Beginn des Bilderfassungsprozesses wird ein zweiter Prozess in Gang gesetzt, in dem das Multibit-Bild aus dem Rohbilddaten-Zwischenspeicher ausgelesen und im Bildprozessor 52 bearbeitet, z. B. auf das vom Bediener gewünschte Maß vergrößert wird. Ein Vorteil dieses Verfahrens liegt darin, dass der FIR-Filter nicht an asymmetrische Blenden angepasst werden muss, da das Bild in der normalen Betriebsgeschwindigkeit gescannt wurde. Die elektronische Hardware erzeugt Daten in der Standard-Bandbreite, liest jedoch die Daten mit einer geringeren Geschwindigkeit ein als die von einem Bild eingehenden Daten. Da der Skalierungsprozess im selben Modus stattfindet wie der Rest der Druckvorstufen-Prozesse, ist eine Feineinstellung des Skalierungsfensters und der sonstigen Skalierungsparameter möglich, ohne dass das Original neu eingescannt werden muss.

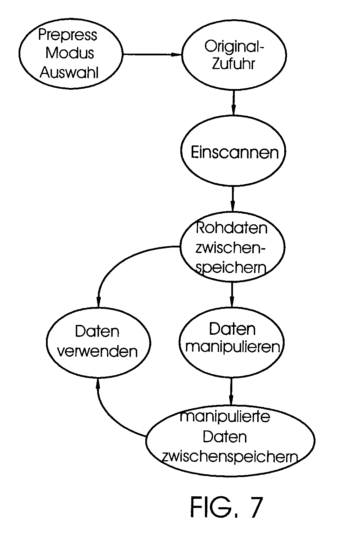

Anhand von Fig. 7 wird deutlich, dass der Scannerbetrieb erfindungsgemäß mit der Einstellung des Druckvorstufen-Modus im der Scanvorrichtung 14 beginnt. Dieser Modus ermöglicht die Ansicht des Bildes oder der Bilddaten in unterschiedlichen Stadien, d. h. von den in der Scanvorrichtung 14 erzeugten Rohbilddaten bis zur "fertigen" Version des Bildes nach der Manipulation der Daten im Rahmen einer oder mehrerer Bildbearbeitungsvorgänge. Ein Originaldokument oder mehrere Originaldokumente 24 werden eingelegt und gescannt. Die Rohbilddaten werden im Rohbilddaten-Zwischenspeicher 54 gespeichert. Bei Bedarf werden die Rohbilddaten an die Bediener-Schnittstelle 18 oder den Drucker 12 geleitet. Andernfalls erfolgt in einem Bildbearbeitungsvorgang oder in mehreren Bildbearbeitungsvorgängen eine Datenmanipulation der Rohbilddaten. Nach der Bildbearbeitung werden die manipulierten Bilddaten in einem Zwischenspeicher für manipulierte Daten 56 gespeichert. Auf Abfrage werden die manipulierten Daten zur Ansicht oder zur Erstellung eines Ausdrucks an die Bediener-Schnittstelle 18 geleitet. Die Rohbilddaten verbleiben so lange im Rohbilddaten-Zwischenspeicher 54, bis keine Verwendung mehr für sie besteht. Auf diese Weise kann ein gescanntes Bild einer Originalvorlage 24 so lange immer wieder editiert, überprüft oder gescannt werden, bis es den gewünschten, zum Drucken mit hoher Auflage geeigneten Zustand erreicht hat. Dieser Scannermodus wird als "Druckvorstufen-Modus" bezeichnet, da er eine Bearbeitung des Bildes vor dem eigentlichen Druckvorgang ermöglicht.

Hierbei wird deutlich, dass die vorliegende Erfindung ein neues Merkmal für einen hochauflösenden Hochleistungsscanner vorschlägt. Obwohl die Erfindung anhand beispielhafter Ausführungsformen gezeigt und beschrieben wurde, sollte für den Fachmann klar sein, dass Änderungen, Auslassungen und Zusätze möglich sind, ohne von dem Grundgedanken und dem Gültigkeitsbereich der Erfindung abzuweichen.

**Liste der Bezugszeichen**

10   Kopier-/Druckreproduktionssystem
12   Markier-/Druckvorrichtung
14   Scanvorrichtung
15   Datenausgangsleitung
16   Computer / Workstation
18   Monitor
20   Tastatur

24    Originaldokument
30    Anwendergerät
32    automatische Dokumenten-Einzugsvorrichtung
34    Belichtungs-Untersystem
36    optisches Untersystem
38    Scannermechanismus mit Auflageplatte
40    Sensoren
42    Scanner-Schnittstellensoftware
44    Scanner-Steuerungssoftware
46    Kontrollvorrichtung
48    Kommunikations-Schnittstellenhardware
50    CCD und analoge Frontend-Elektronik
52    digitaler Bildprozessor
54    Rohbilddaten-Zwischenspeicher
56    Zwischenspeicher für manipulierte Daten
60    Bildbearbeitungsblock
72    A/D-Wandler
80    Datenformatierung
82    Tonwertzunahme-Korrektur
84    Nullpunktverschiebungs-Korrektur
86    automatische Helligkeits- und Farbwert Anpassung
88    Schrägstellungskorrektur
90    FIR-Filterung
92    Skalierung
94    Block für Wiedergabeverfahren


**Patentansprüche**

1.  Verfahren zur Wiedergabe des Bildes eines gedruckten Originaldokument (24) in Form von elektronischen Daten zur Verwendung durch ein Anwendergerät (12, 14, 16, 18),
    **dadurch gekennzeichnet,**
    **dass** das Bild in digitale Bilddaten konvertiert (34, 36, 50) wird, die in einem Zwischenspeicher (54, 56) gespeichert werden und wahlweise zur Manipulation der digitalen Bilddaten an einen Bildprozessor (52) oder an die Anwendervorrichtung (12, 14, 16, 18) geleitet werden.

2.  Verfahren nach Anspruch 1,
    **dadurch gekennzeichnet,**
    **dass** es sich bei dem Anwendergerät um eine Scanvorrichtung (14) handelt.

3.  Verfahren nach einem der Ansprüche 1 bis 2,
    **dadurch gekennzeichnet,**
    **dass** die Wiedergabe des Bildes mittels einer digitalen Markier-/Druckvorrichtung (12) und/oder Computer/Werkstation (16) durchgeführt wird.

4.  Verfahren nach einem der Ansprüche 1 bis 3,
    **dadurch gekennzeichnet,**
    **dass** die Manipulation des Bildes ein Skalieren des Bildes (40) umfasst.

5.  Verfahren nach einem der Ansprüche 1 bis 4,
    **dadurch gekennzeichnet,**
    **dass** bei der Manipulation der digitalen Bilddaten eine bilineare Interpolation erfolgt.

6.  Scan Vorrichtung (14) zum Umwandeln von Originaldokumenten (24) in elektronische Daten, die von einem Anwendergerät (12, 16, 18) verwendet werden, mit einem Konverter (34, 36, 50) zum Umwandeln des Bildes in digitale Bilddaten und mit einem Ausgabedatenpfad (15) zur Weiterleitung der manipulierten digitalen Bilddaten an das Anwendergerät (12, 16, 18),
    **gekennzeichnet durch**,

einen Bildprozessor (52), der die digitalen Bilddaten empfängt und manipuliert und manipulierte Bilddaten erzeugt und einen Zwischenspeicher (54, 56) zum Speichern der Daten.

**7.** Scanvorrichtung nach Anspruch 6,
**dadurch gekennzeichnet,**
**dass** es eine Kontrollvorrichtung (46) beeinhaltet, welche die digitalen Bilddaten an den Bildprozessor (52), den Ausgabedatenpfad (15) und den Zwischenspeicher (54, 56) leitet.

**8.** Scanvorrichtung (14) einem der Ansprüche 6 bis 7,
**gekennzeichnet durch**
eine Kontrollvorrichtung (46), die überprüft, ob die digitalen Bilddaten

- im Zwischenspeicher (54, 56) gespeichert werden oder
- **durch** den Bildprozessor (52) manipuliert werden oder
- über den Ausgabedatenpfad (15) weitergeleitet werden oder
- ob die digitalen Bilddaten zuerst im Bildprozessor (52) manipuliert und dann im Zwischenspeicher (54, 56) gespeichert werden.

**9.** Scanvorrichtung (14) einem der Ansprüche 6 bis 8,
**gekennzeichnet durch**
eine Kontrollvorrichtung (46), die die Verwendung der digitalen Bilddaten in mindestens zwei Betriebsarten zulässt:

- einem direkten Scanmodus zur Weiterleitung digitaler Rohbilddaten an den Ausgabedatenpfad (15),
- einen Bildbearbeitungsmodus zur Weiterleitung manipulierter digitaler Bilddaten an den Ausgabedatenpfad (15),

**10.** Scanvorrichtung (14) nach einem der Ansprüche 6 bis 9,
**gekennzeichnet durch**
eine Kontrollvorrichtung (46) zur Verwendung der digitalen Bilddaten in mindestens drei Betriebsarten:

- einem direkten Scanmodus zur Weiterleitung digitaler Rohbilddaten an den Ausgabedatenpfad (15),
- einen Bildbearbeitungsmodus zur Weiterleitung manipulierter digitaler Bilddaten an den Ausgabedatenpfad (15),
- einen Druckvorstufenmodus zur Weiterleitung der im Zwischenspeicher (54, 56) gespeicherten digitalen Bilddaten an den Ausgabedatenpfad (15).

**11.** Scanvorrichtung, nach einem der Ansprüche 6 bis 10
**gekennzeichnet durch**

- einen ersten Zwischenspeicher (54) zum Speichern der digitalen Rohbilddaten,
- einen zweiten Zwischenspeicher (56) zum Speichern der manipulierten digitalen Bilddaten,
- eine Kontrollvorrichtung (46) zur Kontrolle der Scanvorrichtung (14) in der Weise, dass diese einen Bildbearbeitungsmodus zur Weiterleitung von Daten vom ersten oder zweiten Zwischenspeicher (54, 56) an den Ausgangsdatenpfad (15) aufweist.

**12.** Scanvorrichtung (14) zum Umwandeln von Originaldokumenten (24) in elektronische Daten, die in einem Anwendergerät (12, 16, 18) verwendet werden,

- mit Konvertermitteln (34, 36, 50) zum Umwandeln des von den Originalen ausgehenden Lichts in digitale Bilddaten,
- mit Ausgabedatenpfadmitteln (15) zum Bereitstellen von Daten für das Anwendergerät (12, 16, 18),

**gekennzeichnet durch**

- Bildprozessormittel (52), welche die digitalen Rohbilddaten empfangen und zu manipulierten digitalen Bilddaten manipulieren,
- Zwischenspeichermittel (54, 56) zum Speichern der digitalen Rohbilddaten und/oder der manipulierten digitalen Bilddaten,

- Kontrollmittel (46) zur Verwendung der digitalen Bilddaten in mindestens drei Betriebsarten:

  - einem direkten Scanmodus zur Weiterleitung digitaler Rohbilddaten der Originalseiten an den Ausgabedatenpfad (15),
  - einen Bildbearbeitungsmodus zur Weiterleitung manipulierter digitaler Bilddaten der Originalseiten an den Ausgabedatenpfad (15),
  - einen Druckvorstufenmodus zur Weiterleitung der im Zwischenspeicher (54, 56) gespeicherten digitalen Bilddaten an den Ausgabedatenpfad (15).

13. Scanvorrichtung nach einem der Ansprüche 6 bis 12,
**dadurch gekennzeichnet,**
**dass** die Scanvorrichtung Einzugsmittel (32) zur Zufuhr der Originaldokumente umfasst.

14. Scanvorrichtung nach einem der Ansprüche 6 bis 13,
**dadurch gekennzeichnet,**
**dass** das Anwendergerät eine digitale Markier-/Druckvorrichtung (12) und/oder ein Workstation /Computer (16) ist.

15. Scanvorrichtung nach einem der Ansprüche 6 bis 14,
**dadurch gekennzeichnet,**
**dass** die Manipulation des Bildes ein Skalieren des Bildes (40) einschließt.

16. Scanvorrichtung nach einem der Ansprüche 6 bis 15,
**dadurch gekennzeichnet,**
**dass** bei der Manipulation der digitalen Bilddaten eine bilineare Interpolation erfolgt.

FIG. 1

FIG. 2

Umgebungsregulierung

48

42

46

30

44

36

38

34

32

60

56

52

54

50

40

Energieversorgung

Struktur

FIG. 3a

**FIG. 3b**

IP-Karte

50

CCD

A/D

72

i960 Kontroll Bus

CCD Takt- und Liniaritäts-kontrolle

FIFO

FIFO

Schrägstellung, FIR, Skalierung, Bildschirmwiedergabe

FIFO

Kompimierung

PIP1 PCI Bridge V360

PIP2 PCI Bridge V360

PIP3 PCI Bridge V360

PIP4 PCI Bridge V360

PCI Bus 2

PCI / PCI Bridge PCI2031

PCI Bus 1

Ⓐ Ⓑ Ⓒ

—··— Prozess 1
—···— Prozess 2

EP 1 158 769 A1

EP 1 158 769 A1

FIG. 3c

FIG. 3d

EP 1 158 769 A1

FIG. 4a

FIG. 4b

Ⓐ Ⓔ Ⓕ Ⓖ Ⓓ

Ⓐ Ⓓ Ⓒ Ⓑ Ⓐ

Kontrolldaten-Pfad

Bilddaten-Pfad

Bild Flußpfad

Bildkontrolle

FIFO

FIFO

Bridge 3 zum PCI Bus

Bridge 2 zum PCI Bus

Bridge 1 zum PCI Bus

interner PCI Bus zur IPO Karte

FIG. 4C

FIG. 4d

A

E

F

G

D

Schrägstellungsadressierung u.
Daten Matrix

FIFO1

FIFO2

FIFO3

FIFO3

88

Schrägstellungs
Filter

Speicher
I/F

FIFO

Speicher
(>193
Zeilen)

CPU Schnittst. & Adr. Generierung

Schneiden

Umleitung

Schrägstellungspfad

A

D

J

A

K

D

von auto. Anpassung

Gamma
Tabelle

Umleitung

Schwellenwert

Rasterung

Fehlerdiffusion

Umleitung

Daten
Pfad
Selektor

D0

D1

D2

Umleitung

Kantenentfernung

D

L

94

Kontrolldaten-
Pfad

Bilddaten-
Pfad

Bild
Flußpfad

EP 1 158 769 A1

Skalierung

FIFO4

92

FIFO1
FIFO2
FIFO3

FIR-Filterung

FIFO1
FIFO6

90

D
J

Kontrolldaten-Pfad

Bilddaten-Pfad

Bild Flußpfad

A

A
K
D

Kontrolle

IP Karten Test (Signatur Analyse)

Selektor

Umleitung (Fehlersuche-Pfad)

PM2m 1 Bit Komprimierung

FIFO

Bridge 6 zum PCI Bus

interner PCI Bus zur IPO Karte

Bridge zum CPU PCI Bus

FIFO

D
L

FIG. 4e

EP 1 158 769 A1

Address -Zähler
Interpolations Bits

| | 2 | 9 bits |
|---|---|---|
| Pixel Adress Bits | | Präzisions Bits |

## FIG. 5

Bilineares Interpolations Beispiel (2 Bits)

| 00 | 01 | 10 | 11 |

A [B] 00 / 01 / 10 / 11

X

Y

$$\text{Neues Pixel} = \frac{1}{4} \times \frac{2}{4} \times A + \frac{2}{4} \times \frac{3}{4} \times B + \frac{2}{4} \times \frac{1}{4} \times C + \frac{3}{4} \times \frac{2}{4} \times D$$

## FIG. 6

FIG. 7

**Europäisches Patentamt**

# EUROPÄISCHER RECHERCHENBERICHT

Nummer der Anmeldung

EP 01 11 0175

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 4 533 942 A (W. GALL ET AL.) 6. August 1985 (1985-08-06) | 1-4,6, 13-15 | H04N1/40 |
| Y | | 5,7-12, 16 | |
| | * Spalte 2, Zeile 17 - Spalte 3, Zeile 6 * --- | | |
| Y | US 4 833 625 A (R. D. LAMOREAUX ET AL.) 23. Mai 1989 (1989-05-23) * Spalte 18, Zeile 3 - Spalte 19, Zeile 14 * --- | 5,16 | |
| Y | GB 2 117 902 A (LOGE-INTERPRETATION SYSTEMS INC.) 19. Oktober 1983 (1983-10-19) * Seite 4, Zeile 1 - Zeile 97 * --- | 7 | |
| Y | US 4 468 755 A (KAZUHIKO IIDA) 28. August 1984 (1984-08-28) * Spalte 4, Zeile 30 - Spalte 7, Zeile 8 * --- | 8-12 | |
| A | EP 0 246 010 A (CROSFIELD ELECTRONICS) 19. November 1987 (1987-11-19) --- | | RECHERCHIERTE SACHGEBIETE (Int.Cl.7) H04N |
| A | EP 0 009 378 A (XEROX CORPORATION) 2. April 1980 (1980-04-02) ----- | | |

Der vorliegende Recherchenbericht wurde für alle Patentansprüche erstellt

| Recherchenort | Abschlußdatum der Recherche | Prüfer |
|---|---|---|
| DEN HAAG | 9. Juli 2001 | De Roeck, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

............................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 01 11 0175

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-07-2001

| Im Recherchenbericht angeführtes Patentdokument | Datum der Veröffentlichung | Mitglied(er) der Patentfamilie | Datum der Veröffentlichung |
|---|---|---|---|
| US 4533942 A | 06-08-1985 | EP 0095514 A<br>AT 16143 T<br>DE 3266906 D<br>JP 58211758 A<br>SU 1258341 A | 07-12-1983<br>15-11-1985<br>21-11-1985<br>09-12-1983<br>15-09-1986 |
| US 4833625 A | 23-05-1989 | DE 3750005 D<br>DE 3750005 T<br>EP 0258976 A<br>JP 63126070 A | 14-07-1994<br>19-01-1995<br>09-03-1988<br>30-05-1988 |
| GB 2117902 A | 19-10-1983 | US 4488245 A<br>DE 3306442 A<br>JP 58186023 A | 11-12-1984<br>13-10-1983<br>29-10-1983 |
| US 4468755 A | 28-08-1984 | JP 57078251 A<br>JP 1617706 C<br>JP 2044182 B<br>JP 57078086 A<br>DE 3175423 D<br>EP 0051294 A | 15-05-1982<br>12-09-1991<br>03-10-1990<br>15-05-1982<br>06-11-1986<br>12-05-1982 |
| EP 246010 A | 19-11-1987 | DE 3763744 D<br>JP 2971468 B<br>JP 62272371 A<br>US 4800379 A | 23-08-1990<br>08-11-1999<br>26-11-1987<br>24-01-1989 |
| EP 9378 A | 02-04-1980 | JP 55040460 A<br>CA 1129348 A<br>US 4303948 A | 21-03-1980<br>10-08-1982<br>01-12-1981 |

EPO FORM P0461

Für nähere Einzelheiten zu diesem Anhang : siehe Amtsblatt des Europäischen Patentamts, Nr.12/82